# EUROPÄISCHE PATENTSCHRIFT

(11) **EP 2 502 022 B1**
(45) Veröffentlichungstag und Bekanntmachung des Hinweises auf die Patenterteilung: **09.01.2019**
(21) Anmeldenummer: 10779304.4
(22) Anmeldetag: 09.11.2010
(51) Int. Cl.: G01B 3/40, G01B 3/48

(54) **MESS- UND PRÜFVORRICHTUNG MIT SEGMENTIERTEM GEWINDE UND ZUEINANDER VERSTELLBAREN GEWINDESEGMENTEN**
MEASURING AND TESTING DEVICE HAVING SEGMENTED THREADS AND THREAD SEGMENTS ADJUSTABLE WITH RESPECT TO EACH OTHER
DISPOSITIF DE MESURE ET D'ESSAI AVEC FILETAGE SEGMENTÉ ET SEGMENTS FILETÉS RÉGLABLES LES UNS PAR RAPPORT AUX AUTRES

(30) Priorität: 17.11.2009 DE 102009046744
(43) Veröffentlichungstag der Anmeldung: 26.09.2012
(73) Patentinhaber: Robert Bosch GmbH, 70442 Stuttgart (DE)
(72) Erfinder: MEHLER, Juergen, 66892 Bruchmuehlbach-Miesau (DE)
(86) Internationale Anmeldenummer: PCT/EP2010/067132
(87) Internationale Veröffentlichungsnummer: WO 2011/061098

(56) Entgegenhaltungen:
- DE-A1- 19 527 738
- DE-C- 934 211
- US-A- 1 161 406
- US-A- 2 883 760
- US-A- 5 020 230

## Beschreibung

### Stand der Technik

Die Erfindung betrifft das Gebiet der Mess- und Prüfeinrichtungen. Speziell betrifft die Erfindung das Gebiet der Mess- und Prüfeinrichtungen, die zum Überprüfen von Lagetoleranzen wie Koaxialität, Planlauf oder Winkel von Gewinden dienen.

Denkbar ist es, dass eine Mess- und Prüfeinrichtung mit einem Gewinde in ein entsprechendes Gegengewinde eingeschraubt wird. Hierbei besteht allerdings das Problem, dass auf Grund der Gewindetoleranz ein gewisses Spiel besteht. Zum Erzielen einer spielfreien Aufnahme des Gewindes der Mess- und Prüfeinrichtung von dem Gegengewinde ist es denkbar, dass ein konisches Gewinde oder ein Gewinde mit Steigungsfehlern an der Mess- und Prüfeinrichtung vorgesehen ist. Dies hat allerdings den Nachteil, dass hiermit keine Lehrenfähigkeit und Wiederholbarkeit erreichbar ist.

Aus der DE 934 211 C ist eine nachstellbare Gewindeführung für Feingewindespindeln, insbesondere Mikrometerschrauben, bekannt. Dabei ist ein sich verjüngender Ansatz eines Führungsschafts für die Spindel der Länge nach über eine gewisse Breite diametral durchfräst, so dass zwei Abschnitte mit kreissegmentartigem Querschnitt stehenbleiben. In die Lücke zwischen den Abschnitten sind einander gegenüberliegend zwei Backen eingesetzt., die in der Lücke gleitend geführt werden können. Die freien Enden der Backen und der Schaftabschnitte sind gegen die Kegelflächen zylindrisch abgesetzt und weisen einige durchlaufende Außengewindegänge auf. Auf die Gewindegänge wird ein Druckring aufgeschraubt. Die Gleitbacken werden dabei nach innen geschoben und fügen sich mit all ihren Gewindegängen voll in das Gegengewinde der Mikrometerschraube ein, so dass eine sichere und spielfreie Führung der Mikrometerschraube gewährleistet wird.

Aus der US 1 161 406 ist eine Stößelstange für Motoren bekannt, die einen Körper mit einer Bohrung mit axialem Gewinde und einen Schraubbolzen enthält, der in den Körper eingeschraubt ist. Der Schraubbolzen enthält zwei koaxiale Teile, die mit Mitteln versehen sind, um den Schraubbolzen im Körper zu blockieren.

Aus der DE 195 27 738 A1 ist eine Gewinde- oder Zahnstange bekannt, die im Querschnitt derart segmentiert ist, dass sie eine ganzzahlige Anzahl von Gewinde- oder Zahnsegmenten und eine entsprechende Anzahl von gewinde- und zahnfreien Segmenten aufweist. Ein Verstellkörper besteht aus zwei Scheiben, wovon jede ein zur Gewinde- oder Zahnstange komplementäres Innengewinde oder eine komplementäre Innenverzahnung besitzt. Die beiden Scheiben können eine Stellung einnehmen, die eine freie Verschiebung des Verstellkörpers entlang der Gewinde- oder Zahnstange erlaubt. Sie können eine zweite Stellung zueinander einnehmen, die eine stetige schlüssige Verbindung des Verstellkörpers mit der Gewinde- oder Zahnstange ergibt. Die erste Stellung erlaubt eine Schnellverstellung, die zweite eine Feinverstellung des Verstellkörpers.

Aus der US 2 883 760 A ist eine Prüfeinrichtung für Gewinde bekannt, die ein erstes und eine zweites Gewindesegment umfasst, wobei beide Gewinde entlang einer Längsachse zu einer spielfreien Gewindefixierung verstellbar sind. Weiterhin ist auch aus der US 5 020 230 A eine Prüfeinrichtung für Gewinde bekannt, welche zwei Gewinde umfasst, die axial so beweglich sind, dass eine spielfreie Gewindefixierung erfolgen kann.

### Vorteile der Erfindung

Die erfindungsgemäß Mess- und/oder Prüfeinrichtung mit den Merkmalen des Anspruchs 1 hat demgegenüber den Vorteil, dass eine spielfreie Befestigung der Mess- und/oder Prüfeinrichtung an einem Gegengewinde möglich ist, wobei eine Lehrenfähigkeit und Wiederholbarkeit erreicht ist.
Durch die in den Unteransprüchen aufgeführten Maßnahmen sind vorteilhafte Weiterbildungen der im Anspruch 1 angegebenen Mess- und/oder Prüfeinrichtung möglich.

Das erste Gewindesegment und das zweite Gewindesegment sind erfindungsgemäß zumindest näherungsweise entlang einer Längsachse zueinander verstellbar. Hierdurch ist eine Arretierung der Mess- und/oder Prüfeinrichtung an dem Gegengewinde möglich. Hierbei ist eine spiel- und verspannungsfreie Aufnahme des segmentierten Gewindes in dem Gegengewinde möglich. Diese Arretierung ist in der gewünschten Position möglich und beliebig wiederholbar. Dadurch ist eine Lehrenfähigkeit gegeben.

In vorteilhafter Weise ist das segmentierte Gewinde als segmentiertes Außengewinde ausgestaltet. Mit der Mess- und/oder Prüfeinrichtung können dann an dem zu prüfenden Körper Lagetoleranzen wie Koaxialität, Planlauf oder Winkel von Gewinden, was Innen- und Außengewinde umfasst, ausgehend von bestimmten Ebenen geprüft werden. Hierbei können eine Vielzahl von Werkstücken geprüft werden, wobei für jedes Werkstück die Arretierung der Mess- und/oder Prüfeinrichtung in einer gewissen Position möglich ist. Hierdurch kann die Mess- und/oder Prüfeinrichtung als Lehre dienen. In entsprechender Weise kann das segmentierte Gewinde allerdings auch als segmentiertes Innengewinde ausgestaltet sein.

Vorteilhaft ist es, dass ein Führungsrohr vorgesehen ist, dass das erste Gewindesegment an dem Führungsrohr ausgebildet ist, dass ein Haltekörper vorgesehen ist, der in eine Führungsbohrung des Führungsrohrs entlang einer Längsachse geführt ist, und dass das zweite Gewindesegment an dem Haltekörper ausgebildet ist. Der Haltekörper ist hierbei in vorteilhafter Weise in dem Führungsrohr geführt, wobei eine weitgehend spielfreie Führung möglich ist.

Hierbei ist es ferner vorteilhaft, dass das Führungsrohr zumindest eine Ausnehmung und zumindest ein weiteres Gewindesegment aufweist, das von dem ersten Gewindesegment durch die Ausnehmung getrennt ist, dass der Haltekörper zumindest ein weiteres Gewindesegment aufweist und dass die Gewindesegmente des Haltekörpers in der Ausnehmung des Führungsrohrs angeordnet sind. Speziell ist es vorteilhaft, dass die Gewindesegmente des Haltekörpers an einem Gewindeabschnitt des Haltekörpers angeordnet sind, der sich in die Ausnehmung beziehungsweise die Ausnehmungen des Führungsrohrs erstreckt. Zur Herstellung des segmentierten Gewindes kann der Haltekörper so in dem Führungsrohr positioniert und arretiert sein, dass der Gewindeabschnitt des Haltekörpers in einer Hubmittellage des Haltekörpers angeordnet ist. In diesem arretierten und zusammengebauten Zustand kann dann ein Schleifen des Gewindes in der Hubmittellage erfolgen.

Vorteilhaft ist es ferner, dass eine Arretiervorrichtung vorgesehen ist, die eine Verstellung des ersten Gewindesegments relativ zu dem zweiten Gewindesegment ermöglicht. Ferner ist es vorteilhaft, dass die Arretiervorrichtung ein Federelement aufweist, das einerseits zumindest mittelbar an dem Führungsrohr und andererseits zumindest mittelbar an dem Haltekörper abgestützt ist. Hierbei ist es außerdem von Vorteil, dass das Federelement den Haltekörper gegenüber dem Führungsrohr mit einer Vorspannkraft beaufschlagt, die zumindest näherungsweise entlang einer Längsachse wirkt. Durch Betätigen der Arretiervorrichtung kann somit ein Lösen beziehungsweise Feststellen des Haltekörpers in der Führungsbohrung des Führungsrohrs erreicht werden. Hierbei ist es speziell von Vorteil, dass durch Betätigen der Arretiervorrichtung eine Verschiebbarkeit des Haltekörpers durch Freigeben der Arretierung ermöglicht wird. Im unbetätigten Zustand der Arretiervorrichtung ist dann stets eine Arretierung gewährleistet.

Allerdings ist es auch möglich, dass die Arretiervorrichtung in vorteilhafter Weise eine Spannmutter oder eine Spannschraube aufweist, die eine Verstellung des ersten Gewindesegments relativ zu dem zweiten Gewindesegment ermöglicht. Speziell ist es vorteilhaft, dass an dem Haltekörper ein Spanngewinde ausgebildet ist, das mit der Spannmutter zusammen wirkt, und dass die Spannmutter an einer Stirnfläche des Führungsrohrs abgestützt ist. Durch Anziehen der Spannmutter beziehungsweise Spannschraube kann somit eine Arretierung des Haltekörpers in dem Führungsrohr erreicht werden. Durch Lösen der Spannmutter beziehungsweise Spannschraube ist dann eine Rückstellung möglich, um die Mess- und/oder Prüfvorrichtung zu verstellen oder zu entfernen.

In vorteilhafter Weise kann ein Mess- und/oder Prüfelement der Mess- und/oder Prüfvorrichtung in eine Aufnahmebohrung des Halterohrs eingesetzt werden. Hierdurch ist ein modularer Aufbau möglich, so dass unterschiedliche Mess- und/oder Prüfelemente zum Einsatz kommen können.

### Kurze Beschreibung der Zeichnungen

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigt:
Fig. 1 eine Mess- und/oder Prüfeinrichtung in einer schematischen, auszugsweisen Schnittdarstellung entsprechend einem ersten Ausführungsbeispiel der Erfindung;
Fig. 2 einen Schnitt durch die in Fig. 1 dargestellte Mess- und/oder Prüfeinrichtung entlang der mit II bezeichneten Schnittlinie und
Fig. 3 den in Fig. 1 mit III bezeichneten Ausschnitt einer Mess- und/oder Prüfeinrichtung entsprechend einem zweiten Ausführungsbeispiel der Erfindung.

### Ausführungsformen der Erfindung

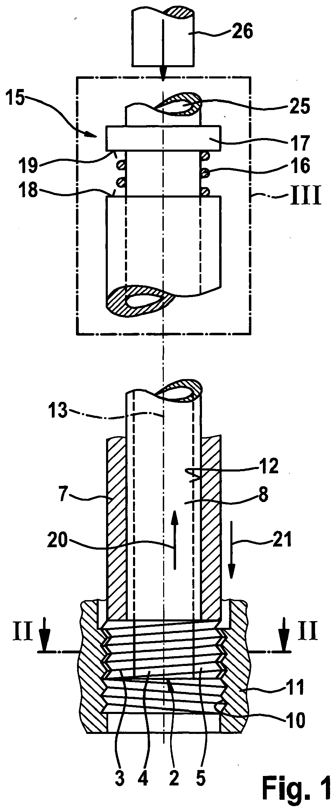

Fig. 1 zeigt eine Mess- und/oder Prüfeinrichtung 1 in einer schematischen, auszugsweisen Schnittdarstellung entsprechend einem ersten Ausführungsbeispiel. Die Mess- und/oder Prüfeinrichtung 1 kann insbesondere als Lehre dienen. Die Mess- und/oder Prüfeinrichtung 1 kann zum Bestimmen von Lagetoleranzen wie Koaxialität, Planlauf oder Winkel von Gewinden ausgehend von bestimmten Ebenen dienen. Die Mess- und/oder Prüfeinrichtung 1 der Erfindung eignet sich allerdings auch für andere Anwendungsfälle.

Die Mess- und/oder Prüfeinrichtung 1 weist ein segmentiertes Gewinde 2 auf, das in diesem Ausführungsbeispiel als Außengewinde ausgestaltet ist. Das segmentierte Gewinde 2 umfasst Gewindesegmente 3, 4, 5, 6. Hierbei sind die Gewindesegmente 3, 5 an einem Gewindeabschnitt eines Führungsrohrs 7 ausgestaltet. Die Gewindesegmente 4, 6 sind an einem Gewindeabschnitt eines Haltekörpers 8 ausgestaltet. Zum Herstellen des segmentierten Außengewindes 2, insbesondere zum Schneiden des segmentierten Gewindes 2, werden das Führungsrohr 7 und der Haltekörper 8 in einer bestimmten Stellung zueinander fixiert. Das hierbei entstehende Gewinde 2 ist möglichst gleichmäßig ausgestaltet. Speziell wird weder eine konische Ausgestaltung des Gewindes 2 noch eine Ausgestaltung mit Steigungsfehlern realisiert.

Die Mess- und/oder Prüfeinrichtung 1 ist in ein Gegengewinde 10 eines Werkstücks 11 teilweise eingeschraubt. Bei dem Werkstück 11 handelt es sich hierbei um ein zu vermessendes oder zu prüfendes Werkstück 11. Speziell kann eine Koaxialität des Gegengewindes 10 zu einer Bohrung, einem Außendurchmesser, einer Planfläche oder dergleichen geprüft werden. Hierfür ist zunächst eine spielfreie Gewindefixierung der Mess- und/oder Prüfeinrichtung 1 in dem Gegengewinde 10 erforderlich. Dies erfolgt durch Verstellen des Haltekörpers 8 relativ zu dem Führungsrohr 7.

Der Haltekörper 8 ist in dem Führungsrohr 7 innerhalb gewisser Grenzen verstellbar geführt. Hierbei ist der Haltekörper 8 in einer Führungsbohrung 12 geführt, wobei die Führung weitgehend spielfrei erfolgen kann. Die Führung des Haltekörpers 8 in der Führungsbohrung 12 erfolgt entlang einer Längsachse 13 der Führungsbohrung 12. Durch Verstellen des Führungsrohrs 7 relativ zu dem Haltekörper 8 werden die beiden Gewindesegmente 4, 6 des Haltekörpers 8 relativ zu den beiden anderen Gewindesegmenten 3, 5 des Führungsrohrs 7 entlang der Längsachse 13 verstellt. Hierdurch erfolgt eine axiale Verspannung des segmentierten Gewindes 2 in dem Gegengewinde 10. Das segmentierte Gewinde 2 teilt sich hierbei sozusagen etwas auf.

Hierdurch wird ein zum Einschrauben benötigtes Spiel eliminiert. Die entsprechenden Unter- und Oberflanken der Gewindesegmente 3 bis 6 des segmentierten Gewindes 2 liegen dann an den Unter- und Oberflanken des Gegengewindes 10 an. Hierdurch ist die axiale Position des Haltekörpers 8 relativ zu dem Führungsrohr 7 festgelegt und reproduzierbar bestimmt. Hierdurch wird eine Lehrenfähigkeit und Wiederholbarkeit erreicht. Speziell kann die Mess- und/oder Prüfeinrichtung 1 beim Vermessen beziehungsweise Prüfen weiterer Gegengewinde 10 in gleicher Position arretiert werden.

Die Mess- und/oder Prüfeinrichtung 1 weist eine Arretiervorrichtung 15 auf. Die Arretiervorrichtung 15 umfasst ein als Spiralfeder ausgestaltetes Federelement 16 und einen Betätigungsring 17. Der Betätigungsring 17 ist mit dem Haltekörper 8 verbunden und insbesondere bezüglich des Haltekörpers 8 entlang der Längsachse 13 nicht verschiebbar. Das Federelement 16 ist einerseits an einer Stirnfläche 18 des Führungsrohrs 7 abgestützt. Andererseits ist das Federelement 16 an einer Stirnfläche 19 des Betätigungsrings 17 abgestützt. Die Stirnflächen 18, 19 sind einander zugewandt. Das Federelement 16 ist im vorgespannten Zustand zwischen den Stirnflächen 18, 19 angeordnet. Da das Federelement 16 über den Betätigungsring 17 an dem Haltekörper 8 abgestützt ist, wirkt die Vorspannkraft des Federelements 16 auf den Haltekörper 8 gegenüber dem Führungsrohr 7. Hierdurch wirkt auf den Haltekörper 8 eine Verstellkraft in einer Richtung 20, während auf das Führungsrohr 7 eine Verstellkraft in der entgegen gesetzten Richtung 21 wirkt. Die Richtungen 20, 21 sind hierbei parallel zu der Längsachse 13. Somit wird von dem Federelement 16 die zum Arretieren des segmentierten Gewindes 2 in dem Gegengewinde 10 erforderliche Kraft aufgebracht. Durch Betätigen des Betätigungsrings 17 entgegen der Kraft des Federelements 16 kann das etwas geteilte segmentierte Gewinde 2 wieder in den Ausgangszustand verstellt werden, so dass ein Spiel zwischen dem Gewinde 2 und dem Gegengewinde 10 besteht. Hierdurch ist ein Einschrauben, ein Verstellen oder ein Herausschrauben der Mess- und/oder Prüfeinrichtung 1 bezüglich des Werkstücks 11 möglich.

Der Haltekörper 8 weist eine Aufnahmebohrung 25 auf, die zum Aufnehmen eines Mess- und/oder Prüfelements 26 dient, das in der Fig. 1 auszugsweise und schematisch dargestellt ist. Das Mess- und/oder Prüfelement 26 kann beispielsweise eine Wippe umfassen. Hierdurch ist ein modularer Aufbau möglich, so dass gegebenenfalls auch mehrere Mess- und/oder Prüfelemente 26 vorgesehen sein können, um die Mess- und/oder Prüfeinrichtung 1 an die jeweilige Größe, Funktion und Prüfaufgabe anzupassen. Hierdurch ist eine vorteilhafte Konstruktion einer Lehre oder dergleichen möglich.

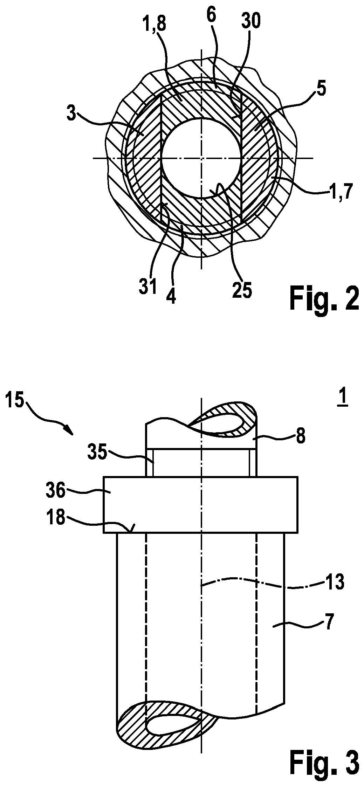

Fig. 2 zeigt einen Schnitt durch die in Fig. 1 dargestellte Mess- und/oder Prüfeinrichtung 1 entlang der mit II bezeichneten Schnittlinie. Das Führungsrohr 7 weist Ausnehmungen 30, 31 auf. Die Ausnehmungen 30, 31 sind hierbei jeweils nutförmig ausgestaltet. Hierdurch sind die Gewindesegmente 3, 5 des Führungsrohrs 7 voneinander getrennt. In die Ausnehmungen 30, 31 erstrecken sich die Gewindesegmente 4, 6 des Haltekörpers 8. Somit kann das segmentierte Gewinde 2 entlang der Längsachse 13 durch Verschieben des Haltekörpers 8 relativ zu dem Führungsrohr 7 etwas geteilt und wieder zusammengesetzt werden.
In diesem Ausführungsbeispiel sind vier Gewindesegmente 3, 4, 5, 6 vorgesehen. Das segmentierte Gewinde 2 kann aber auch auf andere Weise segmentiert sein. Vorzugsweise ist die Anzahl der Gewindesegmente 2, 4, 6 oder 8.
Fig. 3 zeigt den in Fig. 1 mit III bezeichneten Ausschnitt der Mess- und/oder Prüfeinrichtung 1 entsprechend einem zweiten Ausführungsbeispiel. In diesem Ausführungsbeispiel ist an dem Haltekörper 8 im Bereich der Arretiervorrichtung 15 ein Außengewinde 35 angebracht. Ferner ist eine Spannmutter 36 vorgesehen, die mit dem Außengewinde 35 des Haltekörpers 8 zusammen wirkt. Die Spannmutter 36 stützt sich hierbei an der Stirnfläche 18 des Führungsrohrs 7 ab. Die Arretiervorrichtung 15 umfasst in diesem Ausführungsbeispiel die Spannmutter 36, die mit dem Außengewinde 36 zusammen wirkt, um ein Verspannen der Gewindesegmente 3 bis 6 des segmentierten Gewindes 2 zu erzielen. Hierbei kann durch Drehen der Spannmutter 36 um die Längsachse 13 eine Arretierung zwischen dem Führungsrohr 7 und dem Haltekörper 8 hergestellt und wieder gelöst werden.

## Patentansprüche

1. Mess- und/oder Prüfeinrichtung (1) mit einem segmentierten Gewinde (2), wobei das segmentierte Gewinde (2) ein erstes Gewindesegment (3) und zumindest ein zweites Gewindesegment (4) aufweist und wobei das erste Gewindesegment (3) und das zweite Gewindesegment (4) zueinander verstellbar sind, wobei das erste Gewindesegment (3) und das zweite Gewindesegment (4) entlang einer Längsachse (13) zueinander zur spielfreien Gewindefixierung der Mess- und/oder Prüfeinrichtung (1) in dem Gegengewinde (10) eines zu vermessenden oder zu prüfenden Werkstücks in axialer Verspannung verstellbar sind, wobei ein Führungsrohr (7) vorgesehen ist, wobei das erste Gewindesegment (3) an dem Führungsrohr (7) ausgebildet ist, wobei ein Haltekörper (8) vorgesehen ist, der in einer Führungsbohrung (12) des Führungsrohrs (7) entlang der Längsachse (13) geführt ist, und wobei das zweite Gewindesegment (4) an dem Haltekörper (8) ausgebildet ist,
**dadurch gekennzeichnet, dass** das Führungsrohr (7) zumindest eine Ausnehmung (30, 31) und zumindest ein weiteres Gewindesegment (5) aufweist, das von dem ersten Gewindesegment (3) durch die Ausnehmung (30, 31) getrennt ist, wobei der Haltekörper (8) zumindest ein weiteres Gewindesegment (6) aufweist, und wobei die Gewindesegmente (4, 6) des Haltekörpers (8) in der Ausnehmung (30, 31) des Führungsrohrs (7) angeordnet sind, wobei die Gewindesegmente (4, 6) des Haltekörpers (8) an einem Gewindeabschnitt des Haltekörpers (8) angeordnet sind, der sich in die Ausnehmung (30, 31) des Führungsrohrs (7) erstreckt, wobei eine Arretiervorrichtung (15) vorgesehen ist, die eine Verstellung des ersten Gewindesegments (3) relativ zu dem zweiten Gewindesegment (4) ermöglicht.

2. Mess- und/oder Prüfeinrichtung nach Anspruch 1,
**dadurch gekennzeichnet,**
**dass** das segmentierte Gewinde (2) als segmentiertes Außengewinde (2) ausgestaltet ist.

3. Mess- und/oder Prüfeinrichtung nach Anspruch 1 oder 2,
**dadurch gekennzeichnet,**
**dass** die Arretiervorrichtung (15) ein Federelement (16) aufweist, das einerseits zumindest mittelbar an dem Führungsrohr (7) und andererseits zumindest mittelbar an dem Haltekörper (8) abgestützt ist.

4. Mess- und/oder Prüfeinrichtung nach Anspruch 3,
**dadurch gekennzeichnet,**
**dass** das Federelement (16) den Haltekörper (8) gegenüber dem Führungsrohr (7) mit einer Vorspannkraft beaufschlagt, die zumindest näherungsweise entlang einer Längsachse (13) wirkt.

5. Mess- und/oder Prüfeinrichtung nach Anspruch 1 oder 2,
**dadurch gekennzeichnet,**
**dass** die Arretiervorrichtung (15) eine Spannmutter (36) oder eine Spannschraube aufweist, die eine Verstellung des ersten Gewindesegments (3) relativ zu dem zweiten Gewindesegment (4) ermöglicht.

6. Mess- und/oder Prüfeinrichtung nach Anspruch 5,
**dadurch gekennzeichnet,**
**dass** an dem Haltekörper (8) ein Spanngewinde (35) ausgestaltet ist, das mit der Spannmutter (36) zusammen wirkt, und dass die Spannmutter (36) an einer Stirnfläche (18) des Führungsrohrs (7) abgestützt ist.

7. Mess- und/oder Prüfeinrichtung nach einem der Ansprüche 1 bis 6,
**dadurch gekennzeichnet,**
**dass** das Halterohr (8) eine Aufnahmebohrung (25) aufweist, die zum Aufnehmen eines Mess- und/oder Prüfelements (26) dient.

## Claims

1. Measuring and/or testing device (1) with a segmented thread (2), wherein the segmented thread (2) has a first thread segment (3) and at least a second thread segment (4) and wherein the first thread segment (3) and the second thread segment (4) are adjustable with respect to one another, wherein the first thread segment (3) and the second thread segment (4) are adjustable under axial tension with respect to one another along a longitudinal axis (13) for play-free thread fixation of the measuring and/or testing device (1) in the mating thread (10) of a workpiece to be measured or to be tested, wherein a guide tube (7) is provided, wherein the first thread segment (3) is formed on the guide tube (7), wherein a retaining body (8), which is guided in a guide bore (12) of the guide tube (7) along the longitudinal axis (13), is provided and wherein the second thread segment (4) is formed on the retaining body (8),
**characterized in that** the guide tube (7) has at least one clearance (30, 31) and at least one further thread segment (5), which is separated from the first thread segment (3) by the clearance (30, 31), wherein the retaining body (8) has at least one further thread segment (6), and wherein the thread segments (4, 6) of the retaining body (8) are arranged in the clearance (30, 31) of the guide tube (7), wherein the thread segments (4, 6) of the retaining body (8) are arranged on a thread section of the retaining body (8) that extends into the clearance (30, 31) of the guide tube (7), wherein an arresting mechanism (15), which allows an adjustment of the first thread segment (3) relative to the second thread segment (4), is provided.

2. Measuring and/or testing device according to Claim 1,
**characterized**
**in that** the segmented thread (2) is designed as a segmented external thread (2).

3. Measuring and/or testing device according to Claim 1 or 2,
**characterized**
**in that** the arresting mechanism (15) has a spring element (16), which on the one hand is supported at least indirectly on the guide tube (7) and on the other hand is supported at least indirectly on the retaining body (8).

4. Measuring and/or testing device according to Claim 3,
**characterized**
**in that** the spring element (16) applies a pretensioning force that acts at least approximately along a longitudinal axis (13) to the retaining body (8) with respect to the guide tube (7).

5. Measuring and/or testing device according to Claim 1 or 2,
**characterized**
**in that** the arresting mechanism (15) has a clamping nut (36) or a clamping screw, which allows an adjustment of the first thread segment (3) relative to the second thread segment (4).

6. Measuring and/or testing device according to Claim 5,
**characterized**
**in that** the retaining body (8) is provided with a clamping thread (35), which works together with the clamping nut (36), and in that the clamping nut (36) is supported on an end face (18) of the guide tube (7).

7. Measuring and/or testing device according to one of Claims 1 to 6,
**characterized**
**in that** the retaining tube (8) has a receiving bore (25), which serves for receiving a measuring and/or testing element (26).

## Revendications

1. Dispositif de mesure et/ou de test (1), comprenant un filetage segmenté (2), le filetage segmenté (2) présentant un premier segment de filetage (3) et au moins un deuxième segment de filetage (4) et le premier segment de filetage (3) et le deuxième segment de filetage (4) pouvant être réglés l'un par rapport à l'autre, le premier segment de filetage (3) et le deuxième segment de filetage (4) pouvant être réglés l'un par rapport à l'autre par serrage axial le long d'un axe longitudinal (13) pour la fixation par filetage sans jeu du dispositif de mesure et/ou de test (1) dans le filetage conjugué (10) d'une pièce à mesurer ou à tester, un tube de guidage (7) étant prévu, le premier segment de filetage (3) étant réalisé sur le tube de guidage (7), un corps de retenue (8) étant prévu, lequel est guidé le long de l'axe longitudinal (13) dans un alésage de guidage (12) du tube de guidage (7), et le deuxième segment de filetage (4) étant réalisé sur le corps de retenue (8),
**caractérisé en ce que** le tube de guidage (7) présente au moins un évidement (30, 31) et au moins un segment de filetage supplémentaire (5) qui est séparé du premier segment de filetage (3) par l'évidement (30, 31), le corps de retenue (8) présentant au moins un segment de filetage supplémentaire (6), et les segments de filetage (4, 6) du corps de retenue (8) étant disposés dans l'évidement (30, 31) du tube de guidage (7), les segments de filetage (4, 6) du corps de retenue (8) étant disposés au niveau d'une portion de filetage du corps de retenue (8) qui s'étend dans l'évidement (30, 31) du tube de guidage (7), un dispositif de blocage (15) étant prévu, lequel permet un réglage du premier segment de filetage (3) par rapport au deuxième segment de filetage (4).

2. Dispositif de mesure et/ou de test selon la revendication 1,
**caractérisé en ce que**
le filetage segmenté (2) est configuré sous forme de filetage extérieur segmenté (2).

3. Dispositif de mesure et/ou de test selon la revendication 1 ou 2,
**caractérisé en ce que**
le dispositif de blocage (15) présente un élément de ressort (16) qui est supporté d'une part au moins indirectement sur le tube de guidage (7) et d'autre part au moins indirectement sur le corps de retenue (8).

4. Dispositif de mesure et/ou de test selon la revendication 3,
**caractérisé en ce que**
l'élément de ressort (16) sollicite le corps de retenue (8) par rapport au tube de guidage (7) avec une force de précontrainte qui agit au moins approximativement le long d'un axe longitudinal (13).

5. Dispositif de mesure et/ou de test selon la revendication 1 ou 2,
**caractérisé en ce que**
le dispositif de blocage (15) présente un écrou de serrage (36) ou une vis de serrage qui permet un réglage du premier segment de filetage (3) par rapport au deuxième segment de filetage (4).

6. Dispositif de mesure et/ou de test selon la revendication 5,
**caractérisé en ce**
**qu'**un filetage de serrage (35) est réalisé sur le corps de retenue (8), lequel coopère avec l'écrou de serrage (36) et **en ce que** l'écrou de serrage (36) est supporté au niveau d'une surface frontale (18) du tube de guidage (7).

7. Dispositif de mesure et/ou de test selon l'une quelconque des revendications 1 à 6,
**caractérisé en ce que**
le tube de retenue (8) présente un alésage de réception (25) qui sert à recevoir un élément de mesure et/ou de test (26).
